# EUROPÄISCHE PATENTANMELDUNG

(11) **EP 0 890 402 A1**
(43) Veröffentlichungstag der Anmeldung: **13.01.1999**
(21) Anmeldenummer: 97810709.2
(22) Anmeldetag: 26.09.1997
(51) Int. Cl.: B23B 31/30

(54) **Hydraulische Spannvorrichtung für die lösbare Präzisionshalterung von Maschinenelementen**

(30) Priorität: 09.07.1997 CH 1679/97
(71) Anmelder: Dihart AG, CH-4657 Dulliken (CH)
(72) Erfinder: Christoffel, John, 5073 Oberfrick (CH)
(74) Vertreter: Quehl, Horst Max, Dipl.-Ing.

(57) **Zusammenfassung**

Die hydraulische Spannvorrichtung (1) für die lösbare Präzisionshalterung von Maschinenelementen (41) hat einen der Form der Haltefläche des Maschinenelementes angepassten Aufnahmebereich (18), an dem sich mehrere umlaufende Wandteile (20-24) befinden, die durch den Druck eines Hydraulikmedium als Spannbereiche wirken. Die Wandteile (20-24) sind beidseitig durch Stege begrenzt, durch die sie mit dem Gehäuse (2) der Spannvorrichtung (1) fest verbunden sind. Durch die Anordnung von mehr als zwei und von möglichst vielen Spannbereichen nebeneinander ergibt sich eine besonders präzise und steife Einspannung entlang der Haltefläche des Maschinenelementes.

## Beschreibung

Die Erfindung betrifft eine hydraulische Spannvorrichtung für die lösbare Präzisionshalterung von Maschinenelementen mit achsparalleler, insbesondere zylindrischer Haltefläche, mit einem der Form der Halteflache angepassten Aufnahmebereich, an dem sich mindestens ein Spannbereich befindet, wobei der Spannbereich durch einen in Umfangsrichtung des Aufnahmebereichs verlaufenden, elastisch ausbiegbaren Wandteil gebildet ist, indem dieser einen Hohlraum begrenzt, der mit einer hydraulischen Druckquelle verbunden ist.

Spannvorrichtungen dieser Art sind vielfach bekannt, u.a. durch die DE-GM 9305704.0 oder in vergleichbarer Art durch die US-A-5,141,370. Ihnen ist gemeinsam, das nur ein Spannbereich vorhanden ist, der eine erhebliche Länge aufweist, indem er durch eine Spannhülse gebildet ist, die sich über nahezu den gesamten Aufnahmebereich axial erstreckt.

Für eine achsgenaue Halterungen eines Maschinenelementes ist es Voraussetzung, den Aufnahmebereich einschliesslich des mindestens einen Spannbereichs, vorzugsweise durch eine Schleifbearbeitung, möglichst massgenau der Haltefläche des Maschinenelementes anzupassen. Aufgrund der axialen Länge des Spannbereichs bzw. der Länge des ausbiegbaren Wandteiles ergibt sich bei der Herstellung der Spannvorrichtung der Nachteil, dass der Arbeitsdruck des Schleifwerkzeuges den elastischen Wandteil derart ausbiegt, dass die anschliessende elastische Rückstellung zu Mass- und Formungenauigkeiten führt.

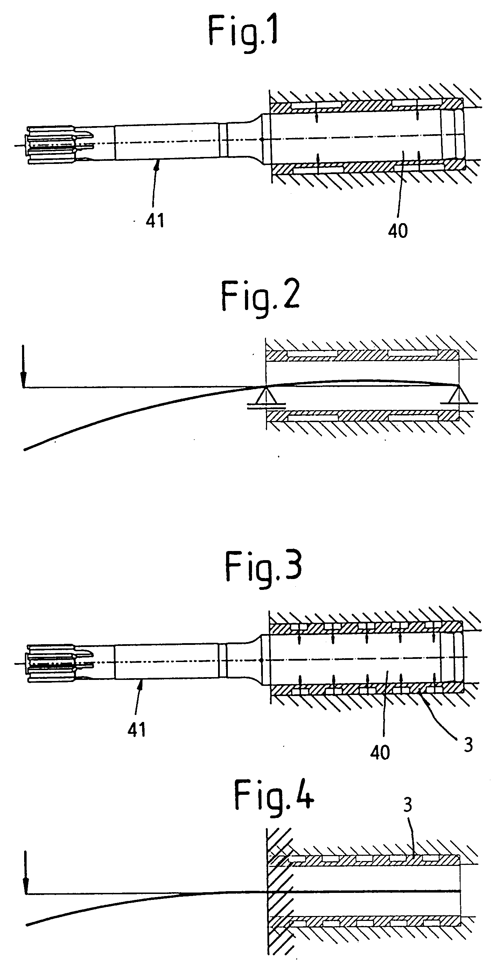

Ein weiterer Nachteil der bekannten Spannvorrichtungen ist dadurch gegeben, dass der einzelne Spannbereich aufgrund der Biegsamkeit des zugehörigen Wandteiles nur eine weiche und damit ungenaue Halterung ermöglicht, die zu einer Verkantung oder Achsverlagerung gegenüber einer Abstützung an den angrenzenden Teilen des Aufnahmebereichs führen kann und bei dynamischer Belastung Biegeschwingungen ermöglicht. Letztere sind besonders nachteilig bei der Halterung von spanabhebenden Präzisionswerkzeugen. Dieser Nachteil ist auch in der genannten DE-GM-9305704.0 beschrieben. Auch die Anordnung von je einem Spannbereich in der Nähe der Enden des Aufnahmebereichs kann diesen Nachteil nicht beseitigen, wie im folgenden durch die Darstellungen in Fig.1 und 2 veranschaulicht ist.

Weiterhin haben die bekannten Spannvorrichtungen den Nachteil, dass aufgrund der erheblichen axialen Erstreckung des Spannbereichs und damit des an den elastischen Wandteil angrenzenden Hohlraumes durch den Hydraulikdruck grosse Kräfte auftreten, die bei Ausführung der Spannvorrichtung zum umfassenden Halten eine massive Ausführung des Gehäuses der Vorrichtung erfordern. Der entsprechend verhältnismässig grosse Aussendurchmesser des Gehäuses führt zu einer Beschränkung der Anwendungsmöglichkeiten der Spannvorrichtung.

Der Erfindung liegt die Aufgabe zugrunde, eine Spannvorrichtung der oben genannten Art derart zu verbessern, dass sie die genannten Nachteile bekannter Vorrichtungen vermeidet und eine Präzisionshalterung ermöglicht, durch die ein Maschinenelement auch unter dynamischen Bedingungen besonders genau und steif lösbar gehalten werden kann. Die Lösung dieser Aufgabe erfolgt aufgrund der Merkmale des Patentanspruchs 1. Vorteilhafte Ausgestaltungen der Erfindung sind Gegenstand der abhängigen Patentansprüche.

Ein besseres Verständnis der Erfindung ergibt sich durch die folgende Beschreibung anhand der Zeichnungen. Es zeigt:
- Fig.1: eine nicht beanspruchte Spannvorrichtung der eingangs genannten Art in Teildarstellung, mit einem gehaltenen Schaftwerkzeug, in Seitenansicht und mit Schnittdarstellung des Aufnahmebereichs,
- Fig.2: eine schematische Darstellung einer Biegelinie eines in der Vorrichtung nach Fig.1 gehaltenen Werkzeuges,
- Fig.3 und 4: Darstellungen entsprechend Fig.1 und 2, mit einer erfindungsgemässen Spannvorrichtung,
- Fig.5: einen Querschnitt durch eine erfindungsgemässe Spannvorrichtung mit separater Darstellung von Verschlussmitteln der Hydraulikeinrichtung,
- Fig.6: einen Querschnitt des Gehäuseteils der Vorrichtung nach Fig.5,
- Fig.7: eine Aufsicht auf die Spannvorrichtung nach Fig.5,
- Fig.8: eine Seitenansicht eines Werkzeugträgers mit einer erfindungsgemässen Spannvorrichtung,
- Fig.9: eine Seitenansicht eines Spannkörpers für die Aufnahme in einem Vorrichtungsgehäuse nach Fig.6,
- Fig.10: einen hälftig geschnitten dargestellten Spannkörper für die Aufnahme in einem Vorrichtungsgehäuse nach Fig.6 entsprechend einem zweiten Ausführungsbeispiel der Erfindung und
- Fig.11: einen Querschnitt durch eine als Spanndorn ausgeführte erfindungsgemässe Spannvorrichtung.

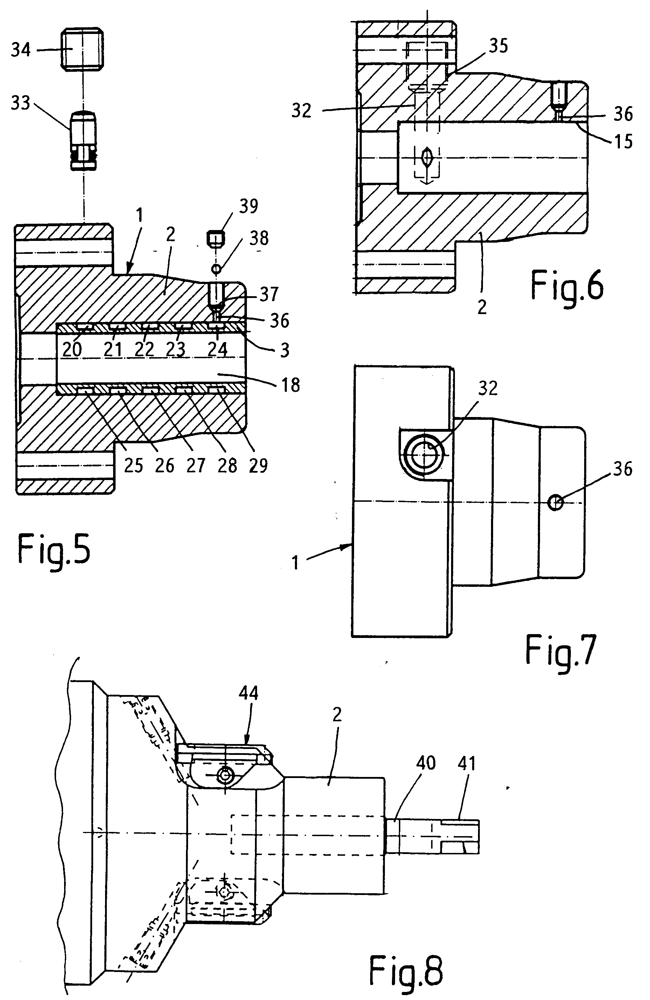

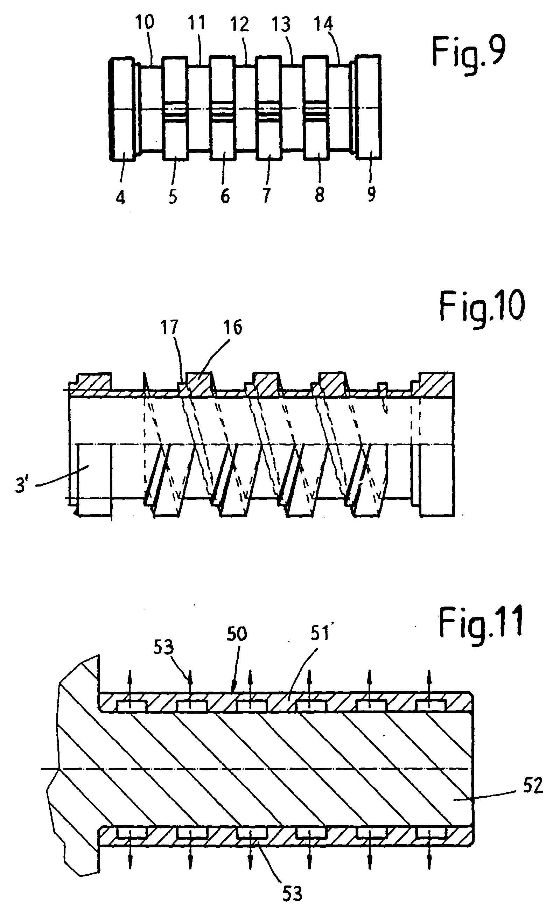

Die Spannvorrichtung 1 des Ausführungsbeispieles nach Fig.5 und 7, mit Teildarstellung in Fig.3, hat ein in Fig.6 gezeigtes Gehäuse 2, in dem ein hülsenartiger Spannkörper 3 nach Fig.9 befestigt ist. Mehrere umlaufende Stege 4 bis 9 des Spannkörpers 3 sind durch Nuten 10 bis 14 gebildet, die spanabhebend aus einem vorzugsweise metallischen Hülsenkörper herausgeschnitten worden sind. Die Stege 4 bis 9 liegen an der Innenwand 15 des Gehäuses 2 an und sind entlang ihres Umfanges durch Löten, Schweissen oder Kleben mit diesem fest verbunden.

Um die Verlötung der Stege 4 bis 9 oder des schraubenlinienförmigen Steges 16 des Spannkörpers 3' nach Fig.10 umlaufend an den unzugänglichen Bereichen zwischen den Stegen und der Innenwand 15 zu ermöglichen, wird Lötmaterial vor dem Einsetzen des Spannkörpers 3, 3' in das Vorrichtungsgehäuse 2 bandförmig entlang der Stege 4 bis 9 oder entlang des Steges 16 verteilt, so dass die Verlötung nach dem Einsetzen des Spannkörpers 3,3' durch sein Erhitzen erfolgen kann. Für die Positionierung des Lötmaterials kann an den Stegen 4 bis 9 oder 16 eine am Beispiel nach Fig.10 gezeigte, z.B. seitliche Rille 17 vorgesehen sein.

Die zwischen den Stegen 4 bis 9 verlaufenden dünnen Wandteile 20 bis 24, die Innenwand 15 des Gehäuses 2 und die Stege 4 bis 9 begrenzen Hohlräume 25 bis 29 für die Aufnahme eines Hydraulikmediums. Z.B. durch jeweils eine Unterbrechung 30 in den Stegen 5 bis 8 und eine Bohrung 31 in dem Gehäuse 2 sind die Hohlräume 25 bis 29 mit einem in Fig.6 durch Strichlinien dargestellten Hohlzylinder 32 verbunden, der einen Kolben 33 für die Erzeugung eines Hydraulikdruckes einschliesst. Die Betätigung des Kolbens 33 erfolgt durch eine am Umfang des Gehäuses 2 zugängliche Schraube 34, die in eine sich an den Hohlzylinder 32 anschliessende Gewindebohrung 35 eingreift.

Die beim Einfüllen des Hydraulikmediums erforderliche Entlüftung erfolgt durch einen nach aussen führenden Entlüftungskanal 36 an dem der Bohrung 31 gegenüberliegenden Ende der inneren Gehäusewand 15. Für seinen Verschluss hat der Entlüftungskanal 36 einen Ventilsitz 37 zur Aufnahme eines Schliesskörpers 37, der durch eine Schraube 39 in Schliessposition bewegbar ist.

Der Spannkörper 3 des Ausführungsbeispieles nach Fig.5 hat somit im Aufnahmebereich 18 für den Schaft 40 eines einzuspannenden Maschinenelementes 41 fünf mit in axialer Richtung beispielsweise gleichem, verhältnismässig geringem Abstand nebeneinander angeordnete Spannbereiche, die durch die unter dem Druck des Hydraulikmediums ausbiegbaren Wandteile 20 bis 24 gebildet sind. Die Grösse der zum Festspannen z.B. des Schaftes 40 eines Werkzeuges 41 erforderlichen Ausbiegung kann durch geometrisch genaue Feinbearbeitung der Innenfläche des Spannkörpers 3 sowie des Schaftes 40 sehr klein gehalten werden.

Da ein Wandteil 20 bis 24 jeweils nur eine kurze Distanz zwischen benachbarten Stegen 4 bis 9 zu überbrücken hat, besitzt der die Kräfte am zu haltenden Maschinenelement 41 aufnehmende und auf das Gehäuse 2 übertragende Spannkörper 3 eine entsprechend grosse Steifigkeit, die sowohl bei der Herstellung des Spannkörpers 3 mit spanabhebender Feinbearbeitung als auch für das achsgetreue Halten des Schaftes 40 von erheblichem Vorteil ist. Dies veranschaulicht auch ein Vergleich zwischen den in Fig.2 und Fig.4 dargestellten Biegelinien von verschiedenen in Fig.1 und Fig.3 dargestellten Spannvorrichtungen, indem der Spannkörper 3 nach Fig.4 durch die zahlreichen Abstützungen am Umfang des Schaftes 40 eine Ausbiegung innerhalb des Aufnahmebereiches 18 der Vorrichtung verhindert. Ausserdem ergibt sich durch die Mehrfachabstützung bzw. Mehrfacheinspannung in jeweils axial eng begrenzten Spannbereichen ein Ausgleich von Formungenauigkeiten des Schaftes 41, so das eine besonders achsgenaue Halterung des Schaftes 40 in der Spannvorrichtung 1 erreicht wird.

Die Spannbereiche können auch durch unterschiedlich breite Stege und/oder einen unterschiedlichen Abstand zwischen ihnen ungleich verteilt sein, so dass sich in axialer Richtung eine bestimmte Verteilungscharakteristik der Steifigkeit der Einspannung erzielen lässt.

Die Anordnung von zahlreichen, in axialer Richtung schmalen Spannbereichen hat durch die damit verbundene Anordnung von durch die Stege 5 bis 8 gebildeten Zwischenbereichen, an denen der Druck des Hydraulikmediums keine Angriffsfläche hat, den weiteren Vorteil, dass das Gehäuse 2 der Vorrichtung entsprechend einer kleineren Druckbeanspruchung ausgesetzt ist und folglich der Aussendurchmesser kleiner gewählt werden kann. Der kleinere Aussendurchmesser ermöglicht zusätzliche Anwendungen der Spannvorrichtung 1, indem entsprechend dem Ausführungsbeispiel nach Fig.8 zusätzlich zu dem im Aufnahmebereich 18 eingespannten Werkzeug 41 ein weiteres Werkzeug 44 mit entsprechend kleinem Arbeitsdurchmesser am Umfang des Gehäuses 2 vorgesehen sein kann, z.B. um mittels des Werkzeuges 41 eine Ventilschaftführung und mittels des Werkzeuges 44 einen zugehörigen Ventilsitz des Zylinderkopfes eines Hubkolbenmotors zu bearbeiten.

Fig.11 zeigt ein Ausführungsbeispiel einer erfindungsgemässen Spannvorrichtung 50, bei dem die Spannkräfte durch die Anordnung eines Spannkörpers 51 am Umfang eines Tragdornes 52 radial nach aussen in Richtung der Pfeile 53 wirken, indem die durch ausbiegbare Wandteile 53 gebildeten sechs Spannbereiche für den Kontakt mit der zylindrischen Innenfläche eines Maschinenelementes bestimmt sind. Die zur Erzeugung eines Hydraulikdruckes vorgesehene Kanalverbindung ist auf nichtdargestellte Weise durch den Tragdorn 52 geführt.

Z.B. durch eine Zylinder-Kolbeneinheit 32,33 gebildete hydraulische Druckquellen können auch mehrfach angeordnet sein, um den Spannbereich der Vorrichtung auf mehrere, hydraulisch voneinander getrennte Spannbereiche zu verteilen, so dass diese mit unterschiedlichem Druck beaufschlagbar sind. Auf diese Weise kann auch ein mit Hohlräumen bzw. unterschiedlichen Querschnittsformen versehenes Maschinenelement verformungsfrei gespannt werden. Ein solches Maschinenelement kann z.B. ein Spannfutter sein, das am Umfang durch Aussparungen für eingebaute Schneiden oder Schneidenhalter geschwächt ist.

## Patentansprüche

1. Hydraulische Spannvorrichtung (1) für die lösbare Präzisionshalterung von Maschinenelementen (41) mit achsparalleler, insbesondere zylindrischer Haltefläche, mit einem der Form der Haltefläche angepassten Aufnahmebereich (18), an dem sich mindestens ein Spannbereich befindet, wobei der Spannbereich durch einen in Umfangsrichtung des Aufnahmebereichs verlaufenden, elastisch ausbiegbaren Wandteil (15-19; 53) gebildet ist, indem dieser einen Hohlraum (25-29) begrenzt, der mit mindestens einer hydraulischen Druckquelle (32,33) verbunden ist, dadurch gekennzeichnet, dass der Aufnahmebereich mindestens drei Spannbereiche hat, die mit achsialem Abstand voneinander angeordnet sind.

2. Spannvorrichtung nach Anspruch 1, dadurch gekennzeichnet, dass die Spannbereiche mit gleichmässigen Abständen voneinander in axialer Richtung des Aufnahmebereiches (18) verteilt sind.

3. Spannvorrichtung nach Anspruch 1 oder 2, dadurch gekennzeicnet, dass die Anzahl der Spannbereiche des Aufnahmebereichs (18) und deren Abstand voneinander entsprechend der Breite der für die axial seitliche Befestigung der Wandteile (15-19,53) erforderlichen Stege (4-9) bestimmt ist.

4. Spannvorrichtung nach einem der Ansprüche 1 bis 3, dadurch gekennzeichnet, dass die jeweils einen Hohlraum begrenzenden Wandteile (15-19; 53) Teil eines sich durch den Aufnahmebereich (18) erstreckenden hülsenartigen Spannkörpers (3,3') sind, der umlaufende Stege (4-9) oder einen schraubenlinienförmig umlaufenden Steg (16) aufweist, die die Begrenzung zwischen den Hohlräumen (25-29) bilden und mit dem Vorrichtungsgehäuse (2) oder einem Tragdorn (52) fest verbunden sind.

5. Spannvorrichtung nach einem der Ansprüche 1 bis 4, dadurch gekennzeichnet, dass die axiale Breite der Stege (4-9;16) und der Hohlräume (25-29) zur Erzielung einer in axialer Richtung variierenden Steifigkeit der Einspannung unterschiedlich ist.

6. Spannvorrichtung nach einem der Ansprüche 1 bis 5, dadurch gekennzeichnet, dass der Aufnahmebereich (18) einen Aufnahmeraum für den Schaft (40) eines Maschinenelementes (41) umschliesst.

7. Spannvorrichtung nach einem der Ansprüche 1 bis 5, dadurch gekennzeichnet, dass der Aufnahmebereich am Umfang eines Spanndornes (52) vorgesehen ist.

8. Spannvorrichtung nach einem der Ansprüche 1 bis 7, dadurch gekennzeichnet, dass an den Stegen (4-9;16) eine durch Lötmaterial gefüllte Aufnahmerille (17) für Lötmaterial vorgesehen ist, das den Spannkörper (3,3',51) mit dem Gehäuse (2) der Spannvorrichtung (1) oder mit einem Tragdorn (52) verbindet.

9. Spannvorrichtung nach einem der Ansprüche 1 bis 7, dadurch gekennzeichnet, dass die Verbindung der Stege (4-9;16) mit dem Gehäuse (2) oder einem Tragdorn (52) durch Schweissen gebildet ist.
